# DEMANDE DE BREVET EUROPEEN

(11) **EP 2 237 238 A1**
(43) Date de publication de la demande: **06.10.2010**
(21) Numéro de dépôt: 09156556.4
(22) Date de dépôt: 29.03.2009
(51) Int. Cl.: G08B 25/01, H04M 1/725

(54) **Dispositif portable, personnel et sécurisé, de dissuasion, d'alarme et de communication pour assurer la sécurité et la localisation des personnes, ou de tout être le portant, en cas d'agression ou d'urgence.**

(71) Demandeur: Tibloux, Olivier, 75020 Paris (FR); Farrugia, Jerome, 91390 Morsang sur Orge (FR)
(72) Inventeur: Tibloux, Olivier, 75020 Paris (FR); Farrugia, Jerome, 91390 Morsang sur Orge (FR)

(57) **Abrégé**

Dispositif portable, personnel et sécurisé, de dissuasion, d'alarme et de communication pour assurer la sécurité et la localisation des personnes, ou de tout être le portant, en cas d'agression ou d'urgence.

L'invention concerne un dispositif portable et personnel permettant de protéger, de sécuriser et de localiser plus efficacement et sans recours à la violence les personnes, ou tout être le portant, en cas d'agression ou d'urgence grâce au déclenchement volontaire, programmé ou automatique ou à distance d'une suite d'événements.

La présente invention se présente sous une forme portable et personnel type ceinture, bracelet, collier, médaillon, à titre d'exemples non limitatifs puisqu'il peut se présenter sous toute autre forme portable pouvant contenir le dispositif technologique qui fait l'objet du brevet.

Le dispositif technologique est constitué d'un boitier (1) sécurisé anti effraction comprenant un système d'alarme (2), un système de communication (3), un système de dissuasion (4) pouvant être déclenchées par une simple pression sur un bouton (5) et/ou par toute tentative d'ouverture non voulue d'un des contacteurs (6) du dispositif, et/ou à distance par l'intermédiaire d'un moyen de communication (7).

Le dispositif selon l'invention est particulièrement destiné à protéger, à sécuriser, à localiser plus efficacement les personnes, ou tout être le portant, en cas d'agression ou d'urgence et à dissuader les agresseurs sans recours à la violence. Le dispositif permet de prévenir plus rapidement et efficacement les personnes désignées par le propriétaire du dispositif ou son représentant légal.

## Description

Dispositif portable, personnel et sécurisé, de dissuasion, d'alarme et de communication pour assurer la sécurité et la localisation des personnes, ou de tout être le portant, en cas d'agression ou d'urgence.

La présente invention concerne un système de protection de la personne en cas d'urgence, assurant plusieurs fonctions : sécurité,dissuasion, localisation, communication, appel de secours, lien avec les proches et confort physique et psychologique. C'est dire que notre invention permet à son utilisateur d'obtenir d'un seul geste l'ensemble de la dissuasion, du signalement à des secours proches ou distants dont chacun aimerait pouvoir disposer en cas d'urgence vitale.

Ce dispositif est personnel, portable, auto protégé et ne peut être ôté sans le consentement de l'utilisateur sans déclencher une séquence d'alertes sonore, visuelle, lumineuse, vocale, téléphonique, et GPS. II assure ainsi la fonction nouvelle d' « ange gardien » électronique personnel et portable, produisant un effet bien supérieur à toute solution existante en termes de protection des personnes.

Outre la diminution de la violence, un autre bénéfice de notre invention est qu'elle procure à son utilisateur, à ses proches ou à ses parents, un réel et nouveau service en terme de sécurité des personnes en se fondant sur un ensemble de moyens technologiques d'alertes, de dissuasion et de communication très efficace et totalement non violent. Ce système constitue une protection efficace et non anxiogène, et n'oblige pas son utilisateur à entrer dans le jeu dangereux et hasardeux de la force ou de la violence, ou à porter sur lui ou à cacher à son domicile ou dans sa voiture un objet dangereux (pour lui-même ou pour ses proches).

Notre invention constitue et apporte donc une solution nouvelle, qui permet de protéger individuellement et plus efficacement les personnes sans recours à la violence ; localiser et secourir des personnes uniquement en cas d'urgence où à leur demande ; sécuriser la vie des enfants à distance des parents en préservant l'autonomie et la liberté individuelle. Elle permet aussi d'améliorer la qualité de vie et l'autonomie des personnes âgées et des personnes malades, d'activer, restaurer ou renforcer des liens sociaux, ; d'informer (en temps réel) des proches d'une situation particulière, Dans tous les cas, elle permet de protéger strictement la vie privée et l'autonomie. Selon des modes particuliers de réalisation, notre invention peut aussi permettre de localiser et secourir des animaux domestiques auxquelles les maîtres et propriétaires sont particulièrement attachés.

Conçu avec un ensemble de moyens technologiques d'alerte (2), de dissuasion (4) et de communication (3) et sous forme de dispositif portable sécurisé (ceinture, collier, bracelet, à titre d'exemples non limitatifs), l'invention ne découle pas de l'usage habituel de l'un de ses composants :

L'ouverture / fermeture du dispositif est sécurisée, mais déclenche une série d'actions en cas d'effraction qui ne découle pas de l'usage habituel de la ceinture, du bracelet ou du collier.

L'utilisation d'une carte SIM (17), dont les fonctions seront activées automatiquement en cas d'urgence pour envoi de sms (21) sans que l'utilisateur ne doive composer un texte puis un numéro destinataire, ce qui ne découle pas de l'usage habituel de la carte SIM (17) et ne s'apparente en aucune façon aux caractéristiques d'un téléphone mobile.

La fonction GPS (18) ou de tout autre système de localisation (19) contenue dans le dispositif est différente des solutions existantes dans ce domaine parce qu'elle est intégrée à un dispositif portable et sécurisé, ne pouvant être dérobé ou arraché, parce qu'elle n'est pas basée, lorsqu'elle concerne les personnes, sur la mise sous tension permanente d'un téléphone mobile, parce qu'elle a seulement pour but d'aider ou de retrouver des personnes ou des êtres en difficulté ou en danger.

**Domaine technique : protection des personnes et des biens, sécurité, alarme, dissuasion, communication, matériel électronique, localisation, accessoires, vêtements, dispositifs portables.**

### État de la technique antérieure :

Dans l'état actuel des connaissances et de la production industrielle, les dispositifs de sécurité ou les méthodes de protection des personnes sont conçues comme méthodes agressives contre l'agresseur, générant ainsi une escalade de violence au lieu de diminuer celle-ci. Notre invention met fin à cette antinomie frustrante et dangereuse pour les hommes et la société : fournir des outils et techniques militaires ou policières de défense et d'agression à l'usage de civils anxieux non formés et non préparés s'avère à la fois dangereux pour l'individu et la société, peu efficace, anxiogène, éthiquement et juridiquement paradoxal. De même socialement, le simple fait de porter ou d'utiliser une arme de sécurité stigmatise celui qui le fait aux yeux d'autrui (cadre familial, cadre professionnel, cadre amical ou social) qui le considère alors comme un individu peureux, suspicieux, volontiers agressif.

Ce qui fait que beaucoup, ne pouvant assumer personnellement ou professionnellement une telle image, renoncent à se protéger ou à équiper leurs proches de moyens de protection, alors que les violences aux personnes existent toujours et augmentent souvent. De même les parents ou les proches, pour des raisons analogues se voient démunis de moyens acceptables et efficaces pour assurer en leur absence ou en l'absence de tiers la protection de leurs enfants ou de leurs proches.

Ainsi il n'existe aucune solution pour un individu désirant légitimement se protéger qui permette à la fois une protection efficace sans causer lui-même de dommages à autrui, ni user de violence, ni risquer de voir son arme se retourner contre lui. Et de surcroît, aucun système portable, sécurisé et auto protégé n'est capable d'alerter et de dissuader immédiatement ; de signaler automatiquement un incident aux personnes proches ou à des secours spécialisés et de localiser un individu (et ce uniquement en cas d'urgence ou à sa demande). Seul notre dispositif permet de remédier à tous ces inconvénients et son usage est à la fois adapté à tous et à tout âge, plus efficace que les solutions existantes, parfaitement légales, pleinement morales et assumables socialement et personnellement par son utilisateur. Le bénéfice est même encore supérieur car il rassure en permanence l'utilisateur et apporte un confort de vie sans équivalent dans le domaine. Il peut même présenter un intérêt pour l'agresseur potentiel puisqu'il le dissuade de passer à l'acte. Ainsi tant l'individu que la société ou même l'agresseur trouvent leur intérêt grâce à notre dispositif.

Notre invention constitue et apporte donc une solution nouvelle, qui permet de protéger individuellement et plus efficacement les personnes sans recours à la violence ; localiser et secourir des personnes uniquement en cas d'urgence où à leur demande ; sécuriser la vie des enfants à distance des parents en préservant l'autonomie. Elle permet aussi d'améliorer la qualité de vie et l'autonomie des personnes âgées et des personnes malades, d'activer, restaurer ou renforcer des liens sociaux, ; d'informer (en temps réel) des proches d'une situation particulière, Dans tous les cas, elle permet de protéger strictement la vie privée et l'autonomie. Selon des modes particuliers de réalisation, notre invention peut aussi permettre de localiser et secourir des animaux domestiques auxquelles les maîtres et propriétaires sont particulièrement attachés.

### Exposé de l'invention :

La présente invention, lorsqu'elle s'applique aux personnes, se présente soit sous forme de ceinture, bracelet, collier et médaillon, ou sous toute autre forme portable pouvant contenir le dispositif technologique qui fait l'objet du brevet. Le dispositif comporte :
1. Une ceinture, ou bracelet, ou collier ou médaillon ou toute autre forme d'accessoire portable
2. Un Contacteur (ouverture, fermeture) (6)
3. Un boitier (1) sécurisé anti effraction
4. Une batterie (12) lithium à titre d'exemple non limitatif
5. Une horloge interne (26)
6. Une carte à puce de type SIM (17) localisable par GPS (18)
7. Un haut parleur / sirène d'une puissance égale ou supérieure à 90 db (8)
8. Un transpondeur téléphonique (20) à titre d'exemple non limitatif
9. Un système d'envoi automatique de SMS (21)
10.Un bouton de déclenchement d'urgence (5)
11.Une carte mémoire (22) de type SSD/DIMM à titre d'exemple non limitatif
12.Une antenne téléphonique mobile (23)
13.Un synthétiseur DTMF (9) ou équivalent à titre d'exemple non limitatif
14.Un préamplificateur (10) du signal généré par le synthétiseur
15.Un amplificateur (11)
16.Témoin du niveau de batterie
17.Une camera numérique (13) grand angle à titre d'exemple non limitatif
18. et suivant : tout autre élément ou composant permettant le fonctionnement du dispositif.

Si la présente invention se présente sous forme de ceinture (à titre d'exemple non limitatif puisqu'elle peut se présenter sous toute autre forme portable), elle peut être réalisée de la façon suivante : dans la boucle de la ceinture ou à tout autre endroit de la ceinture se trouve ou bien est dissimulé un boitier (1) sécurisé anti effraction comprenant les éléments décrits ci-dessus et au minimum : **un système électronique de communication (3)** comprenant une carte à puce de type SIM (17) localisable par GPS (18) ou tout autre système de localisation (19), un transpondeur téléphonique (20) (à titre d'exemple non limitatif), un système d'envoi automatique de SMS (21) , une carte mémoire (22) de type SSD/DIMM (à titre d'exemple non limitatif), une antenne téléphonique mobile (23), et tout autre élément (24) ou composant (25) permettant son fonctionnement; **un système d'alarme (2) et de dissuasion (4)** comprenant un haut parleur / sirène (8) d'une puissance égale ou supérieure à 90 dB, un synthétiseur DTMF (9) (à titre d'exemple non limitatif), un préamplificateur du signal (10) généré par le synthétiseur (9), un amplificateur (11), et tout autre élément (15) ou composant (16) permettant son fonctionnement. Pour pouvoir être déclenché, ce dispositif comprend aussi au minimum un bouton de déclenchement d'urgence (5) un contacteur (ouverture, fermeture) (6), une batterie (12) lithium (à titre d'exemple non limitatif), une horloge interne (26).

Selon des modes particuliers de réalisation ou d'utilisation, il peut comporter aussi :
1. Détecteurs de perte de verticalité
2. Magnétophones électroniques visant à renforcer la dissuasion en diffusant des messages à l'agresseur en alternance avec la sirène
3. Microphones intégrés
4. Dispositif de dissuasion olfactif par diffusion d'une odeur nauséabonde et répulsive
5. Un ou plusieurs flash(es) lumineux
6. Une caméra numérique (à titre d'exemple non limitatif)
7. Lecteurs optiques de carte magnétique avec cartes magnétiques permettant l'arrêt du dispositif
8. Serrures munies d'une clé sécurisée personnelle (type NF A2P à titre d'exemple non limitatif)
9. Boucles de fermeture comportant un mini boîtier à code
10.Une boucle de fermeture munie d'un système de déclenchement immédiat et d'un système d'arrêt différé du dispositif.
11. Batteries supplémentaires ou accumulateurs
12. Préamplificateurs et amplificateurs supplémentaires

Selon le mode particulier de réalisation concernant les animaux domestiques, le dispositif ne comporte principalement que les éléments suivants :

- Une ceinture, ou sangle, ou bracelet, ou collier ou médaillon ou toute autre forme d'accessoire portable
1. - Un Contacteur (ouverture, fermeture) (6)
2. - Un boitier sécurisé anti effraction (1)
3. - Une batterie (12) lithium (à titre d'exemple non limitatif)
4. - Une horloge interne (26)
5. - Une carte à puce de type SIM (17) localisable par GPS (18) ou tout autre système de localisation (19)
6. - Un transpondeur téléphonique (20) (à titre d'exemple non limitatif)
7. - Un système d'envoi automatique de SMS (21)
8. - Une carte mémoire (22) de type SSD/DIMM (à titre d'exemple non limitatif)
9. - Une antenne téléphonique mobile (23)
10.- Témoin du niveau de batterie
11.- tout autre élément (24) ou composant (25) permettant le fonctionnement du dispositif.

Dans le cas particulier du dispositif concernant les animaux domestiques ; le système électronique de communication (3) et de localisation par GPS (18) ou tout autre système de localisation (19) peut soit se mettre en route automatiquement dès lors que l'on installe le dispositif portable sur l'animal, soit être mis en route à distance par l'intermédiaire d'un moyen de communication.

Dans tous les cas est inscrit sur le dispositif quelque soit sa forme un numéro donnant accès à un service (27) possédant de façon confidentielle, et en respectant la législation en vigueur concernant le respect de la vie privée, les informations permettant de prévenir les personnes désignées par le propriétaire du dispositif ou son représentant légal.

Plusieurs modes de déclenchement sont possibles, pour exemple :

1- En cas d'agression ou d'urgence, une simple pression de l'utilisateur sur le bouton d'alarme (5) du dispositif, et/ou l'ouverture forcée d'un des contacts (6) déclenchent la suite d'évènements suivants :
- Mise en route de la sirène (8) d'une puissance égale ou supérieure à 90 db (à titre d'exemple non limitatif)
- Déclenchement de flash(es) (14) lumineux (option)
- Emission de signaux d'alertes sous forme de bips de plus en plus rapprochés dans le temps et de plus en plus forts en termes de volume sonore (option)
- Diffusion de messages vocaux préenregistrés dissuasifs à destination de l'agresseur (option)
- Diffusion d'une odeur nauséabonde et répulsive (option)
- Prise de ligne téléphonique (20)
- Composition d'un ou plusieurs numéros de téléphone préalablement programmés envoyant un signal d'alerte aux destinataires
- Activation de la balise GPS (18) (option) avec actualisation régulière, ou activation de tout autre système de localisation (19)
- Envoi des coordonnées GPS dans le SMS (21)
- Activation de la caméra (13) (en option)

2- Le dispositif est auto-protégé grâce au contacteur de fermeture/ouverture (6) qui assure une boucle d'autoprotection. Toute tentative d'ouverture non voulue et non-conforme à la procédure déclenche ainsi la suite d'évènements décrite ci-dessus.

3- Dans le cas particulier du dispositif concernant les animaux domestiques et concernant le cas d'un animal égaré, le système électronique de communication (3) et de localisation par GPS (18) ou tout autre système de localisation (19) peut soit se mettre en route automatiquement dès lors que l'on installe le dispositif portable sur l'animal, soit être mis en route à distance par l'intermédiaire d'un moyen de communication.

### Description sommaire des figures des dessins

La présente invention, lorsqu'elle s'applique aux personnes, se présente soit sous forme de ceinture, bracelet, collier et médaillon, ou sous toute autre forme portable pouvant contenir le dispositif technologique qui fait l'objet du brevet. Le dispositif comporte à titre d'exemples non limitatifs :
1. Une ceinture, ou bracelet, ou collier ou médaillon ou toute autre forme d'accessoire portable
2. Un Contacteur (ouverture, fermeture) (6)
3. Un boitier (1) sécurisé anti effraction
4. Une batterie (12) lithium à titre d'exemple non limitatif
5. Une horloge interne (26)
6. Une carte à puce de type SIM (17) localisable par GPS (18) ou tout autre système de localisation (19)
7. Un haut parleur / sirène d'une puissance égale ou supérieure à 90 db (8)
8. Un transpondeur téléphonique (20) à titre d'exemple non limitatif
9. Un système d'envoi automatique de SMS (21)
10.Un bouton de déclenchement d'urgence (5)
11.Une carte mémoire (22) de type SSD/DIMM à titre d'exemple non limitatif
12.Une antenne téléphonique mobile (23)
13.Un synthétiseur DTMF (9) ou équivalent à titre d'exemple non limitatif
14.Un préamplificateur (10) du signal généré par le synthétiseur
15.Un amplificateur (11)
16.Témoin du niveau de batterie
17.Une camera numérique (13) grand angle à titre d'exemple non limitatif
18. et suivant : tout autre élément ou composant permettant le fonctionnement du dispositif

Si la présente invention se présente sous forme de ceinture (à titre d'exemple non limitatif puisqu'elle peut se présenter sous toute autre forme portable), elle peut être réalisé de la façon suivante : dans la boucle de la ceinture ou à tout autre endroit de la ceinture se trouve ou bien est dissimulé un boitier (1) sécurisé anti effraction comprenant les éléments décrits ci-dessus et au minimum : **un système électronique de communication (3)** comprenant une carte à puce de type SIM (17) localisable par GPS (18) ou tout autre système de localisation (19) , un transpondeur téléphonique (20) (à titre d'exemple non limitatif), un système d'envoi automatique de SMS (21) , une carte mémoire (22) de type SSD/DIMM (à titre d'exemple non limitatif), une antenne téléphonique mobile (23), et tout autre élément (24) ou composant (25) permettant son fonctionnement; **un système d'alarme (2) et de dissuasion (4)** comprenant un haut parleur / sirène (8) d'une puissance égale ou supérieure à 90 dB, un synthétiseur DTMF (9) (à titre d'exemple non limitatif), un préamplificateur du signal (10) généré par le synthétiseur (9), un amplificateur (11), et tout autre élément (15) ou composant (16) permettant son fonctionnement . Pour pouvoir être déclenché, ce dispositif comprend aussi au minimum un bouton de déclenchement d'urgence (5) un contacteur (ouverture, fermeture) (6), une batterie (12) lithium (à titre d'exemple non limitatif), une horloge interne (26).

Selon des modes particuliers de réalisation ou d'utilisation, il peut comporter aussi :
1. Détecteurs de perte de verticalité
2. Magnétophones électroniques visant à renforcer la dissuasion en diffusant des messages à l'agresseur en alternance avec la sirène
3. Microphones intégrés
4. Dispositif de dissuasion olfactif par diffusion d'une odeur nauséabonde et répulsive
5. Un ou plusieurs flash(es) lumineux
6. Une caméra numérique (à titre d'exemple non limitatif)
7. Lecteurs optiques de carte magnétique avec cartes magnétiques permettant l'arrêt du dispositif
8. Serrures munies d'une clé sécurisée personnelle (type NF A2P à titre d'exemple non limitatif)
9. Boucles de fermeture comportant un mini boîtier à code
10.Une boucle de fermeture munie d'un système de déclenchement immédiat et d'un système d'arrêt différé du dispositif.
11.Batteries supplémentaires ou accumulateurs
12. Préamplificateurs et amplificateurs supplémentaires

Selon le mode particulier de réalisation concernant les animaux domestiques, le dispositif ne comporte principalement que les éléments suivants :
1. - Une ceinture, ou sangle, ou bracelet, ou collier ou médaillon ou toute autre forme d'accessoire portable
2. - Un Contacteur (ouverture, fermeture) (6)
3. - Un boitier sécurisé anti effraction (1)
4. - Une batterie (12) lithium (à titre d'exemple non limitatif)
5. - Une horloge interne (26)
6. - Une carte à puce de type SIM (17) localisable par GPS (18) ou tout autre système de localisation (19)
7. - Un transpondeur téléphonique (20) (à titre d'exemple non limitatif)
8. - Un système d'envoi automatique de SMS (21)
9. - Une carte mémoire (22) de type SSD/DIMM (à titre d'exemple non limitatif)
10. Une antenne téléphonique mobile (23)
11. Témoin du niveau de batterie
12. tout autre élément (24) ou composant (25) permettant le fonctionnement du dispositif.

Dans le cas particulier du dispositif concernant les animaux domestiques ; le système électronique de communication (3) et de localisation par GPS (18) ou tout autre système de localisation (19) peut soit se mettre en route automatiquement dès lors que l'on installe le dispositif portable sur l'animal, soit être mis en route à distance par l'intermédiaire d'un moyen de communication.

Dans tous les cas est inscrit sur le dispositif quelque soit sa forme un numéro donnant accès à un service (27) possédant de façon confidentielle, et en respectant la législation en vigueur concernant le respect de la vie privée, les informations permettant de prévenir les personnes désignées par le propriétaire du dispositif ou son représentant légal.

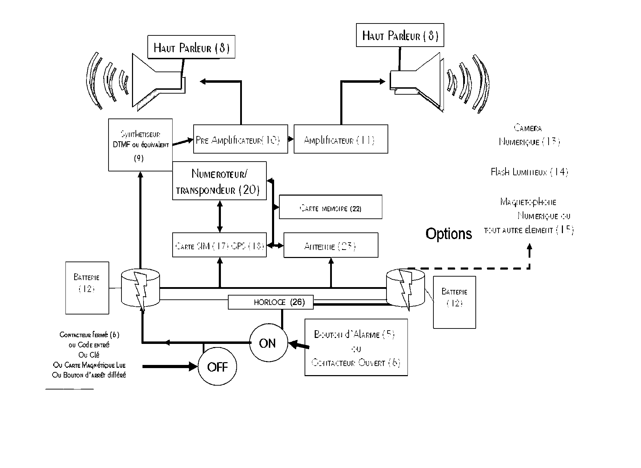

## Revendications

1. Dispositif portable, personnel et sécurisé, de dissuasion, d'alarme et de communication pour assurer la sécurité et la localisation des personnes, ou de tout être le portant, en cas d'agression ou d'urgence **caractérisé en ce qu'**il comporte un boitier (1) sécurisé anti effraction comprenant un système d'alarme (2), un système de communication (3), un système de dissuasion (4).

2. Dispositif selon la revendication 1 **caractérisé en ce que** le système d'alarme (2), le système de communication (3), le système de dissuasion (4) sont déclenchées par une simple pression sur un bouton (5), et/ou par toute tentative d'ouverture non voulue d'un des contacteurs (6) du dispositif, et/ou à distance par l'intermédiaire d'un moyen de communication (7).

3. Dispositif selon la revendication 1 ou la revendication 2 **caractérisé en ce que** le système d'alarme (2) et de dissuasion (4) comporte un ou des contacteurs (6) un haut parleur / sirène d'une puissance égale ou supérieure à 90 dB(8), un synthétiseur DTMF(9), un préamplificateur(10) du signal généré par le synthétiseur, un ou plusieurs amplificateurs(11), une batterie (12) et peut comporter aussi une caméra (13), un déclencheur de flash lumineux (14) et tout autre élément(15) ou composant(16) permettant son fonctionnement.

4. Dispositif selon la revendication 1 ou la revendication 2 **caractérisé en ce que** le système de communication (3) comporte une carte à puce de type SIM (17) localisable par GPS (18) ou tout autre système de localisation (19), un transpondeur téléphonique (20), un système d'envoi automatique de SMS(21), une carte mémoire de type SSD/DIMM(22) à titre d'exemple non limitatif, une antenne téléphonique mobile(23), une horloge interne (26) et tout autre élément(24) ou composant (25) permettant son fonctionnement.

5. Dispositif selon la revendication 1 **caractérisé en ce qu'**est inscrit sur le dispositif quelque soit sa forme un numéro donnant accès à un service (27) possédant de façon confidentielle, et en respectant la législation en vigueur concernant le respect de la vie privée, les informations permettant de prévenir les personnes désignées par le propriétaire du dispositif ou son représentant légal.
